# EUROPEAN PATENT APPLICATION

(11) **EP 4 679 594 A1**
(43) Date of publication of application: **14.01.2026**
(21) Application number: 24219960.2
(22) Date of filing: 13.12.2024
(51) Int. Cl.: H01M 50/213, H01M 10/613, H01M 10/653, H01M 50/367

(54) **BATTERY PACK AND ELECTRIC APPARATUS**

(30) Priority: 11.07.2024 CN 202421643057 U; 05.09.2024 WO PCT/CN2024/117012
(71) Applicant: Eve Energy Co., Ltd., Huizhou, Guangdong 516006 (CN)
(72) Inventor: FENG, Yanqiang, Huizhou, 516006 (CN); WANG, Yuanyuan, Huizhou, 516006 (CN)
(74) Representative: Regimbeau

(57) **Abstract**

Provided are a battery pack and an electric apparatus, which relates to the technical field of batteries. The battery pack includes a box (10), a cold plate (22) and a cell assembly (30). The box (10) is provided with an accommodation space. The cell assembly (30) is located in the accommodation space and includes multiple cells (31). The multiple cells (31) are arranged in a horizontal plane and are disposed at equal spacing. A potting adhesive is filled in the cell assembly. The cold plate (22) fits an upper side and/or a lower side of the cell assembly (30) and the potting adhesive.

## Description

### TECHNICAL FIELD

The present application relates to the technical field of batteries, for example, a battery pack and an electric apparatus.

### BACKGROUND

The volume utilization efficiency of a cylindrical battery system has an inherent disadvantage over the volume utilization efficiency of a square battery system.

Serpentine tubes or extruded profile pipelines are used between multiple columnar cells as cooling pipelines, resulting in a relatively large space occupied by the serpentine tubes in a plane direction and a decrease in the volume utilization efficiency of a cylindrical battery system. The number of components in a pipeline of a battery system of the serpentine tube is relatively large, resulting in a relatively high cost of the parts. Moreover, in a battery pack, the heat dissipation uniformity of the multiple cells is relatively poor.

### SUMMARY

The present application provides a battery pack, which can improve an energy density of the battery pack, simplify a structure and improve the integrity of the battery pack.

The present application provides an electric apparatus, which has longer endurance and fewer parts and is assembled faster through the use of the battery pack provided in the present application.

The battery pack includes a box, a cell assembly and a cold plate. The box is provided with an accommodation space. The cell assembly is located in the accommodation space and includes multiple cells. The multiple cells are arranged in a horizontal plane and are disposed at equal spacing. The cell assembly is configured to be filled with a potting adhesive. The cold plate fits an upper side and/or a lower side of the cell assembly and the potting adhesive.

The present application further provides an electric apparatus including the battery pack provided in the present application.

The present application has the beneficial effects described below. The present application provides a battery pack. A cold plate is disposed on an upper side and/or a lower side of a cell assembly so that a serpentine plate disposed between cells in a horizontal plane can be omitted and more space can be provided for accommodating cells in the horizontal plane, thereby improving an energy density of the battery pack. Similarly, a liquid cooling structure related to the arrangement of the serpentine plate can be omitted together, thereby simplifying the arrangement of the liquid cooling structure and saving the space. In addition, since multiple cells are disposed at equal spacing, after a potting adhesive is filled, the consistency of heat conduction from each cell to the potting adhesive is good, and the contact between the cold plate and a colloid of the potting adhesive improves the heat dissipation uniformity of the cell assembly. An electric apparatus has longer endurance and fewer parts and is assembled faster through the use of the battery pack provided in the present application.

### BRIEF DESCRIPTION OF THE DRAWINGS

FIG. 1 is a structure diagram of a battery pack according to an embodiment of the present application.
FIG. 2 is an exploded view of a battery pack where a cell assembly is hidden according to an embodiment of the present application.
FIG. 3 is a structure diagram of a battery pack where a cell assembly is hidden according to an embodiment of the present application.
FIG. 4 is a section view taken along A-A of FIG. 3.
FIG. 5 is an enlarged view of part B in FIG. 4.
FIG. 6 is an exploded view of a structure of a battery pack according to an embodiment of the present application.
FIG. 7 is another exploded view of a structure of a battery pack according to an embodiment of the present application.

### Reference list

- 10: box
- 11: sidewall
- 12: baseplate
- 20: integration assembly
- 21: support
- 22: cold plate
- 221: support plate
- 222: flow channel plate
- 223: water inlet pipe
- 224: water outlet pipe
- 23: foaming adhesive layer
- 24: insulating layer
- 30: cell assembly
- 31: cell
- 40: pressure relief space

### DETAILED DESCRIPTION

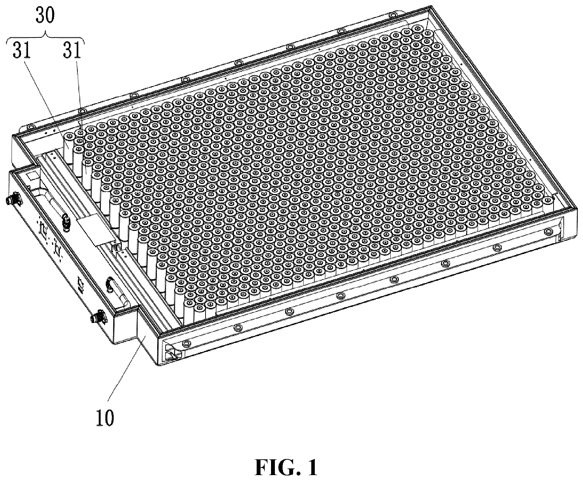

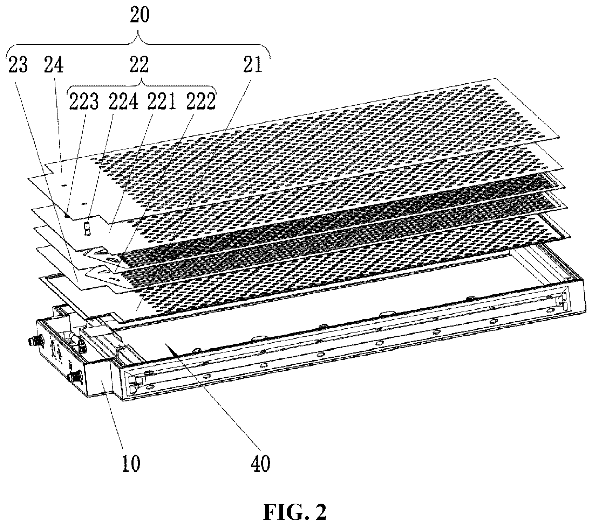

The present application provides a battery pack, which can improve an energy density of the battery pack, simplify a structure and improve the integrity of the battery pack. As shown in FIGS. 1 and 2, the battery pack includes a box 10, a cold plate 22 and a cell assembly 30. The box 10 is provided with an accommodation space. The cell assembly 30 is located in the accommodation space and includes multiple cells 31. The multiple cells 31 are regularly arranged in a horizontal plane and are disposed at equal spacing. A potting adhesive is filled in the cell assembly. The cold plate 22 fits an upper side and/or a lower side of the cell assembly 30 and the potting adhesive. In the battery pack, the cold plate 22 is disposed on the upper side and/or the lower side of the cell assembly 30 so that a serpentine plate disposed between cells 31 in the horizontal plane can be omitted and more space can be provided for accommodating the cells 31 in the horizontal plane, thereby improving the energy density of the battery pack. Similarly, a liquid cooling structure related to the arrangement of the serpentine plate can be omitted together, thereby simplifying the arrangement of the liquid cooling structure and saving the space. In addition, since the multiple cells 31 are disposed at equal spacing, after the potting adhesive is filled, the consistency of heat conduction from each cell 31 to the potting adhesive is good, and the contact between the cold plate 22 and a colloid of the potting adhesive improves the heat dissipation uniformity of the cell assembly 30.

The multiple cells 31 are columnar and are arranged in multiple rows, and every adjacent rows of cells 31 are disposed in a staggered manner. With such arrangement, for the columnar cells 31, a design of equal spacing between adjacent cells 31 is conveniently implemented. In other embodiments, the cells 31 may also be rectangular or polygonal.

The cold plate 22 fits the lower side of the cell assembly 30 and the lower side of the potting adhesive. The battery pack further includes an integration assembly 20. The integration assembly 20 includes a support 21 and a cold plate 22 that are sequentially stacked on a bottom side of the box 10. The cold plate 22 is fixedly connected to the support 21 into a whole. The cell assembly 30 is located on an upper side of the integration assembly 20. The cold plate 22 is above the support 21 and is directly in contact with the cells 31 on a lower side of the cells 31 so that a heat exchange effect is better. Moreover, the cold plate 22 is fixedly connected to the support 21 into a whole, and the cold plate 22 and the support 21 also jointly play a role in supporting the cell assembly 30. On the one hand, the cold plate 22 avoids being crushed, and on the other hand, the support strength is higher.

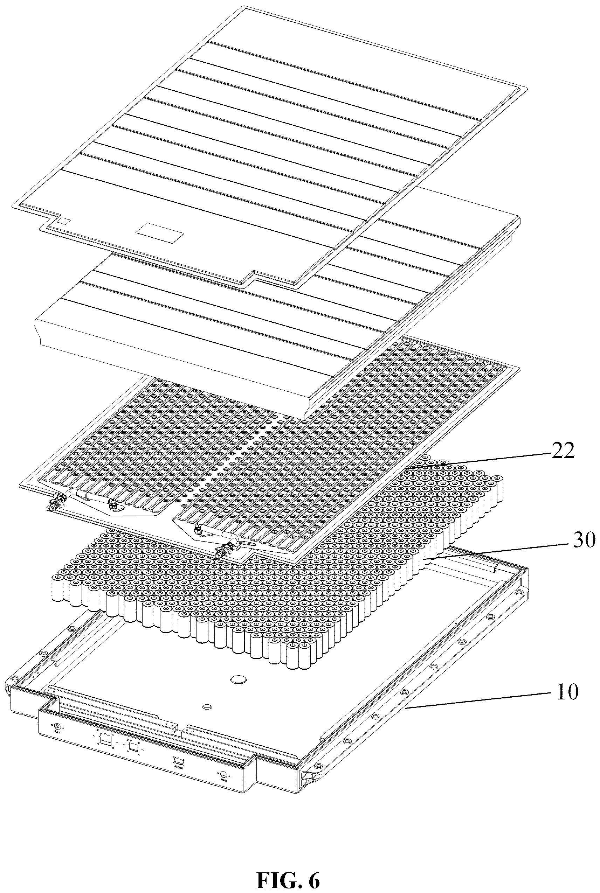

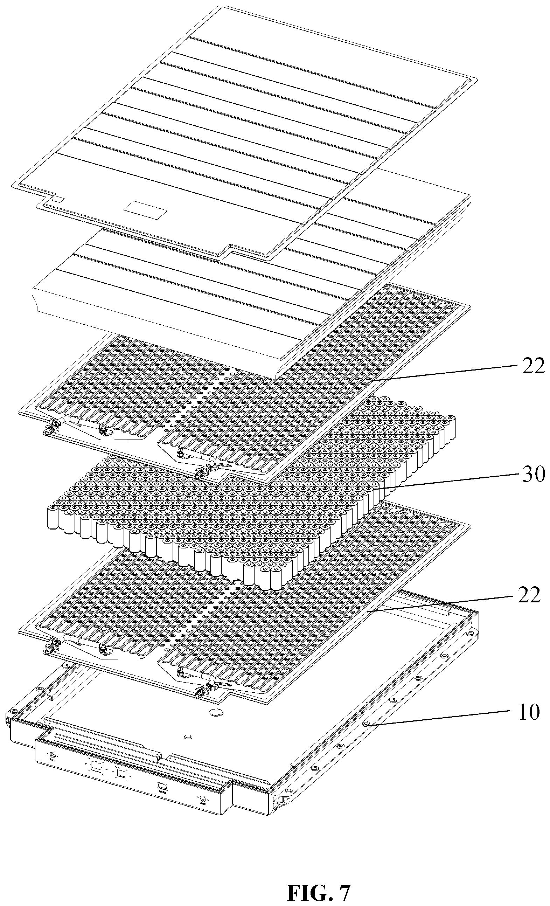

In other embodiments, as shown in FIG. 6, the cold plate 22 may also be disposed over the cell assembly 30, or as shown in FIG. 7, the cold plate 22 may also be disposed over and under the cell assembly 30, which is not limited here.

The cold plate 22 is connected to the support 21 through brazing or riveting. Deformation after brazing is small, and a welding position is smooth and beautiful, thereby facilitating ensuring the appearance stability of the cold plate 22 and the support 21. The connection manner of riveting is faster.

The integrated component formed by the cold plate 22 and the support 21 is also connected to the box 10 through brazing or riveting.

As shown in FIG. 2, the integration assembly 20 further includes a foaming adhesive layer 23, and the foaming adhesive layer 23 is filled between the support 21 and the cold plate 22. The foaming adhesive layer 23 can further enhance the support strength of the integration assembly 20 to the cell assembly 30, thereby meeting multiple operating conditions and complex application requirements for the battery pack. For example, when the battery pack is impacted by an outside world, the foaming adhesive layer 23 can play a relatively good buffering role, thereby preventing the cold plate 22 or the support 21 from being broken or deformed.

Multiple vias are disposed on each of the support 21 and cold plate 22, multiple first vias of the support 21 are disposed in one-to-one correspondence with multiple second vias of the cold plate 22, and the multiple cells 31 are placed over the multiple second vias of the cold plate 22 in one-to-one correspondence. On the one hand, the vias play a certain positioning role in the cells 31, and on the other hand, the vias can implement the stable pressure relief of the thermal runaway of the cells 31, and a temperature obtained after the thermal runaway is further lowered through the further cooling of a liquid cooling system, thereby reducing a risk of thermal diffusion of the system.

As shown in FIG. 2, the integration assembly 20 further includes an insulating layer 24, and the insulating layer 24 is located between the cell assembly 30 and the integration assembly 20. When the cell 31 does not fail, the insulating layer 24 covers the via so that the insulation can be performed, a sealing property can be ensured and it is ensured that an impact force caused by the failure of the cell 31 can break the insulating layer 24 when the cell 31 fails, thereby completing the pressure relief The insulating layer 24 may be attached to a top of the cold plate 22, or may be stacked on the cold plate 22 through a hot pressing manner, which is not limited here.

The foaming adhesive layer 23 has a filling thickness of only a few millimeters. Therefore, the impact force caused by the failure of the cell 31 can also break the foaming adhesive layer 23, thereby implementing the pressure relief.

As shown in FIG. 1, a potting adhesive is disposed in the box 10 located on an upper portion of the integration assembly 20, thereby facilitating the fixing of the cells 31 and improving temperature consistency between cell assemblies 30.

The potting adhesive includes a bottom layer adhesive and a gap adhesive, where the bottom layer adhesive is located between the cell assembly 30 and the integration assembly 20 (the cold plate 22), and the gap adhesive is located on an upper portion of the bottom layer adhesive and is filled inside the cell assembly 30 or between the cell assembly 30 and the box 10.

In an embodiment, the bottom layer adhesive is a heat conductive adhesive, and the gap adhesive is a foaming adhesive. With such arrangement, a heat conduction speed between the cells 31 and the cold plate 22 is improved, and the foaming adhesive fixes the cells 31 and prevents one of the cells 31 from failing and transmitting the failure to another cell 31.

In an embodiment, both the bottom layer adhesive and the gap adhesive are foaming adhesives. With such arrangement, the overall structural strength of the battery pack is more uniform, and the impact resistance is better.

In an embodiment, both the bottom layer adhesive and the gap adhesive are heat conductive adhesives. With such arrangement, the temperature equalization performance of the multiple cells 31 is the best.

Gaps between adjacent vias are consistent, that is, gaps between the cells 31 remain consistent, and spacing between two adjacent cells 31 is L, and 0.5 mm < L ≤ 10 mm. A gap of 0.5 mm is reserved to meet a requirement for assembly and a requirement for the thermal safety of the battery pack, thereby using the accommodation space in the battery pack to the maximum extent. In the related art, serpentine tubes cannot ensure equal gaps between cells 31. In this embodiment, under the premise of omitting serpentine tubes, the gaps between the cells 31 are set to be equal, thereby simplifying the design difficulty of the internal parts of the battery pack and improving the matching of a battery system. The design of equal spacing can improve the consistency of the potting adhesive between the cells 31 and further improve the temperature equalization performance of the cell assembly 30.

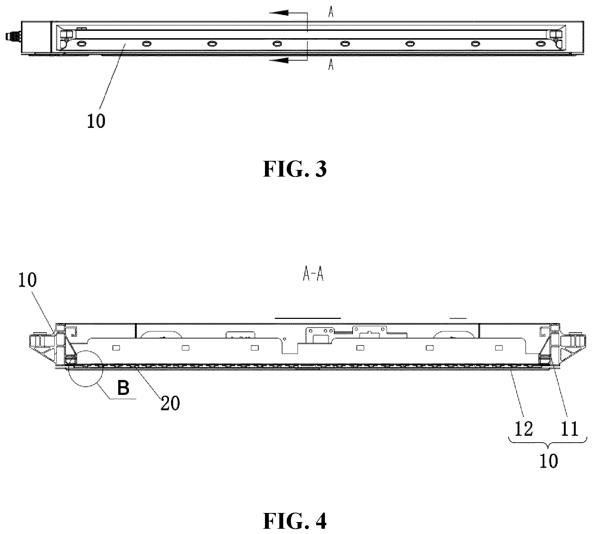

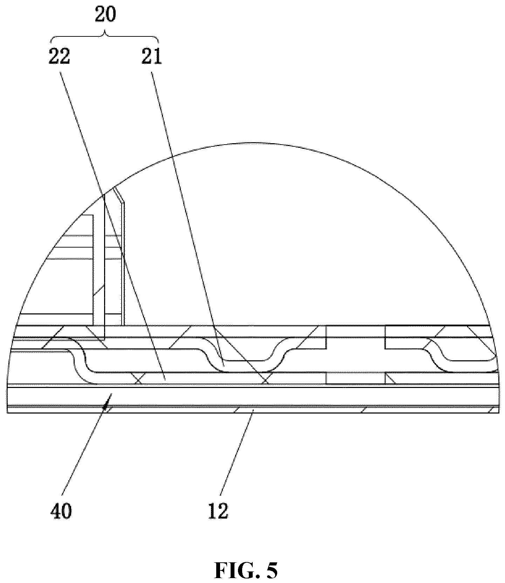

As shown in FIGS. 3 to 5, a pressure relief space 40 is formed between the integration assembly 20 and a baseplate 12 of the box 10, the multiple first and second vias communicate with the pressure relief space 40, and the pressure relief space 40 communicates with an outside of the box 10. When the cell 31 fails, a gas can quickly enter the pressure relief space 40 from the via and rush out to the outside of the box 10, thereby quickly relieving pressure and preventing the battery pack from explosion due to gas accumulation. The height of the pressure relief space 40 is between 1mm and 50 mm, inclusive. The height of the pressure relief space 40 can be flexibly adjusted according to pressure relief and bottom protection requirements. A pressure relief channel can be disposed on a sidewall 11 of the box 10 so that the pressure relief space 40 is connected to the outside of the box 10. This structure is often disposed in the related art and is not repeated here.

As shown in FIG. 2, the cold plate 22 includes a support plate 221, a flow channel plate 222, a water inlet pipe 223 and a water outlet pipe 224. The cell assembly 30 is placed on the support plate 221. The flow channel plate 222 is fixedly connected to the support plate 221. A flow channel for a liquid to flow is formed in the flow channel plate 222. The support 21 is located on a side of the flow channel plate 222 facing away from the support plate 221. The water inlet pipe 223 and the water outlet pipe 224 are both installed on the support plate 221 and communicate with two ends of the flow channel, respectively. A cooling liquid enters from the water inlet pipe 223, flows in the flow channel formed in the flow channel plate 222, exchanges heat with the cell assembly 30 and flows out from the water outlet pipe 224 to perform cyclic heat exchange. The support plate 221 is connected to the flow channel plate 222 through brazing, thereby reducing an amount of deformation of the cold plate 22 as much as possible.

The insulating layer 24 is located on the support plate 221, and the foaming adhesive layer 23 is located between the flow channel plate 222 and the support 21.

This embodiment further provides an electric apparatus including the battery pack provided in the embodiment of the present application. The electric apparatus has longer endurance and fewer parts and is assembled faster through the use of the battery pack. For example, the electric apparatus may be a new energy vehicle or a ship, which is not limited here.

## Claims

1. A battery pack, comprising:
a box (10), provided with an accommodation space;
a cell assembly (30), located in the accommodation space and comprising a plurality of cells (31), wherein the plurality of cells (31) are arranged in a horizontal plane and are disposed at equal spacing, and the cell assembly (30) is configured to be filled with a potting adhesive; and
a cold plate (22), wherein the cold plate fits at least one of an upper side or a lower side of the cell assembly (30) and at least one of an upper side or a lower side of the potting adhesive.

2. The battery pack according to claim 1, wherein spacing between two adjacent cells (31) of the plurality of cells (31) is L, and 0.5 mm < L ≤ 10 mm.

3. The battery pack according to claim 1 or 2, in response to the cold plate (22) fits the lower side of the cell assembly (30) and the lower side of the potting adhesive, the battery pack further comprises a support (21), the cold plate (22) and the support (21) are sequentially stacked on a bottom side of the box (10), the cold plate (22) is located between the support (21) and the cell assembly (30), and the cold plate (22) is fixedly connected to the support (21) into a whole to form an integration assembly (20) in the battery pack.

4. The battery pack according to claim 3, wherein the potting adhesive comprises a bottom layer adhesive and a gap adhesive, wherein the bottom layer adhesive is located between the cell assembly (30) and the integration assembly (20), and the gap adhesive is located on an upper portion of the bottom layer adhesive and is filled inside the cell assembly (30) or between the cell assembly (30) and the box (10); and
wherein the bottom layer adhesive is a heat conductive adhesive, and the gap adhesive is a foaming adhesive; or both the bottom layer adhesive and the gap adhesive are foaming adhesives; or both the bottom layer adhesive and the gap adhesive are heat conductive adhesives.

5. The battery pack according to claim 3 or 4, wherein the cold plate (22) is connected to the support (21) through brazing or riveting.

6. The battery pack according to any of claims 3 to 5, wherein the integration assembly (20) further comprises a foaming adhesive layer (23), and the foaming adhesive layer (23) is filled between the support (21) and the cold plate (22).

7. The battery pack according to any of claims 3 to 6, wherein the integration assembly (20) further comprises an insulating layer (24), and the insulating layer (24) is located between the cell assembly (30) and the integration assembly (20).

8. The battery pack according to any one of claims 3 to 7, wherein the support (21) comprises a plurality of first vias, the cold plate (22) comprises a plurality of second vias, the plurality of first vias of the support (21) are disposed in one-to-one correspondence with the plurality of second vias of the cold plate (22), and the plurality of cells (31) are placed over the plurality of second vias of the cold plate (22) in one-to-one correspondence.

9. The battery pack according to claim 8, wherein a pressure relief space (40) is formed between the integration assembly (20) and a baseplate (12) of the box (10), the plurality of first vias of the support (21) and the plurality of second vias of the cold plate (22) are configured to communicate with the pressure relief space (40), and the pressure relief space (40) is configured to communicate with an outside of the box (10).

10. The battery pack according to claim 9, wherein a height of the pressure relief space is H, and 1 mm ≤ H ≤ 50 mm.

11. The battery pack according to any one of claims 3 to 8, wherein the cold plate (22) comprises:
a support plate (221) on which the cell assembly (30) is placed;
a flow channel plate (222) fixedly connected to the support plate (221), wherein a flow channel for a liquid to flow is formed in the flow channel plate (222), and the support (21) is located on a side of the flow channel plate (222) facing away from the support plate (221); and
a water inlet pipe (223) and a water outlet pipe (224) both installed on the support plate (221) and communicating with two ends of the flow channel, respectively.

12. The battery pack according to any one of claims 1 to 10, wherein the plurality of cells (31) are columnar and are arranged in a plurality of rows, and every adjacent rows of cells (31) of the plurality of cells (31) are disposed in a staggered manner.

13. An electric apparatus, comprising: the battery pack according to any one of claims 1 to 12.
